# EUROPÄISCHE PATENTANMELDUNG

(11) **EP 1 178 261 A2**
(43) Veröffentlichungstag der Anmeldung: **06.02.2002**
(21) Anmeldenummer: 01113098.6
(22) Anmeldetag: 29.05.2001
(51) Int. Cl.: F21S 9/03

(54) **Solarleuchte mit einem im wesentlichen kugelförmigen, mindestens teilweise lichtdurchlässigen Leuchtenkörper**

(30) Priorität: 31.07.2000 DE 10037237
(71) Anmelder: Rudolf Zimmermann GmbH & Co. KG., 96052 Bamberg (DE)
(72) Erfinder: Drux, Rolf, 96047 Bamberg (DE)
(74) Vertreter: Kruspig, Volkmar, Dipl.-Ing.

(57) **Zusammenfassung**

Die Erfindung betrifft eine Solarleuchte mit einem im wesentlichen kugelförmigen, mindestens teilweise lichtdurchlässigen Leuchtenkörper, dieser enthaltend einen Solarzellenträger (9), mindestens einen Akkumulator (5), einen Laderegler (6), einen Dämmerungsschalter (22) sowie mindestens eine Strahlungsquelle. Erfindungsgemäß ist der kugelförmige Leuchtenkörper oder das Leuchtengehäuse radial geteilt ausgeführt, wobei ein unterer Teil (1) eine haubenartige Gehäusebaugruppe (3) aufnimmt. Oberhalb der haubenartigen Gehäusebaugruppe (3) ist über ein winkelvariables, arretierbares Gelenk (8) der Solarzellenträger (9) befestigt. Weiterhin ist im unteren Teil (1) des Leuchtenkörpers eine Aussparung (16) zur Aufnahme eines Reflektors (17) gesehen, wobei der Reflektor (17) mit einer transparenten Scheibe (18) abgedeckt wird und diese im wesentlichen bündig mit dem unteren Leuchtenkörperteil abschließt. Im Fokus des Reflektors (17) oder Reflektorkörpers ist eine Vielzahl von lichtemittierenden Dioden (21), bevorzugt Weißlicht-Dioden, als Strahlungsquelle angeordnet. Der obere Teil (2) und der untere Teil (1) des Leuchtenkörpers sind, eine Kugel bildend, miteinander lösbar verbunden.

## Beschreibung

Die Erfindung betrifft eine Solarleuchte mit einem im wesentlichen kugelförmigen, mindestens teilweise lichtdurchlässigen Leuchtenkörper, dieser enthaltend einen Solarzellenträger, mindestens einen Akkumulator, einen Laderegler, einen Dämmerungsschalter sowie mindestens eine Strahlungsquelle gemäß Oberbegriff des Patentanspruchs 1.

Aus dem deutschen Gebrauchsmuster DE 200 00 688 U1 ist eine Solar-Leuchtenstele bekannt, wobei zum oberen freien Ende hin Solarmodule in einer Glas- oder Kunststoffkugel und zum unteren freien Ende hin Akkumulator und Laderegler in einem Sockelelement angeordnet sind. Die einzelnen Komponenten können konstruktiv zu einer Einheit zusammengefügt werden.

Gemäß der vorbekannten Leuchte soll also der Solaraufsatz in Form einer Kugel, Halbkugel oder Pyramide gestaltet sein. Die Solarzelle der bekannten Leuchte steht in Wirkverbindung mit einem Akkumulator, einem Regler sowie einem Dämmerungsschalter und Leuchtmitteln. Konkret soll der Solaraufsatz so dimensioniert werden, daß die genannten Baugruppen im Aufsatz selbst untergebracht werden können.

Weitere bekannte Solarleuchten, z.B. sogenannte Gartenleuchten, verfügen über ein zylindrisches Gehäuse, das eine haubenartige Abdeckung aufweist. An der haubenartigen Abdeckung sind an sich bekannte mono- oder polykristalline Solarpaneele befestigt, die einen im Gehäuseinneren befindlichen Akkumulator über eine Ladeschaltung speisen, um zur Nachtzeit Energie an ein Leuchtmittel, z.B. eine Niedrigenergie-Leuchtstoffröhre über eine geeignete Schaltung abzugeben.

Die Leuchten sind für einen optimalen Gebrauch so zu positionieren, daß möglichst viel Sonnenenergie respektive Tageslicht auf die Solarpanelle gelangt, so daß eine ausreichende Energie für den Ladevorgang bereitgestellt wird. In Abhängigkeit von den geographischen, aber auch örtlichen Gegebenheiten ist jedoch der optimale Einfallswinkel der Strahlungsenergie, die es photovoltaisch umzusetzen gilt, unterschiedlich.
Bei bisher bekannt gewordenen Leuchten wird durch eine konstruktive Ausgestaltung im Sinne eines festen Winkels zur Ausrichtung der Solarzellen oder Solarpaneele versucht, einen Kompromiß zwischen den gestalterischen Möglichkeiten einerseits und den technischen Anforderungen andererseits zu finden.

Unter Berücksichtigung des geschilderten Standes der Technik ist es daher Aufgabe der Erfindung, eine weiterentwickelte Solarleuchte mit einem im wesentlichen kugelförmigen, mindestens teilweise lichtdurchlässigen Leuchtenkörper anzugeben, welcher alle funktionswesentlichen Elemente enthält. Dabei gilt es, die funktionswesentlichen Elemente einerseits geschützt im Gehäuse, andererseits aber leicht zugänglich und an unterschiedliche Einsatzfälle variabel anpaßbar unterzubringen.

Weiterhin soll die Solarleuchte mit hocheffektiven Leuchtmitteln versehen sein, so daß auch bei geringen Ladezeiten bzw. reduzierter Solarenergiezufuhr ein längerer Betrieb und damit längere Einsatzzeiten möglich sind.

Die Lösung der Aufgabe der Erfindung erfolgt mit einer Solarleuchte gemäß den Merkmalen des Patentanspruchs 1, wobei die Unteransprüche mindestens zweckmäßige Ausgestaltungen und Weiterbildungen umfassen.

Der Grundgedanke der Erfindung liegt demnach darin, von einer kompletten, in sich geschlossenen Kugel-Funktionseinheit auszugehen, wobei die Funktionseinheit über einen Ringhalter mit ganz beliebigen Standfüßen oder weiteren Befestigungsmitteln kombiniert werden kann.

Die verwendete mindestens teilweise transparente Kugel als Gehäuse zur Aufnahme des Leuchtmittels und der elektronischen Komponenten, des Solarpaneels und weiterer Mittel, z.B. eines Bewegungsmelders, ermöglicht durch die gegebene Form einen Selbstreinigungseffekt. Optische Totalreflexion mit der Folge eines verminderten Wirkungsgrads bei der Umsetzung der Solarenergie in elektrische Energie wird vermieden.

Durch die Ausführung der haubenartigen Gehäusebaugruppe mit einem winkelverstellbaren Gelenk für den Solarzellenträger ergibt sich die Möglichkeit des besonders einfachen und leichten Einstellens und Anpassens der für die Energiewandlung vorgesehenen Solarpaneele bzw. Solarzellen.

Erfindungsgemäß ist der kugelförmigen Leuchtenkörper radial geteilt ausgeführt, wobei ein unterer Teil die erwähnte haubenartige Gehäusebaugruppe aufnimmt.

Oberhalb der haubenartigen Gehäusebaugruppe ist der Solarzellenträger, welcher die Solarzellen aufnimmt, über ein winkelvariables, arretierbares Gelenk befestigt.

Im unteren Teil des Leuchtenkörpers ist eine Aussparung zur Aufnahme eines Reflektors vorgesehen, wobei der Reflektor mit einer transparenten Scheibe abgedeckt wird und diese im wesentlichen bündig mit dem unteren Leuchtenkörperteil abschließt.

Im Fokus des Reflektors bzw. eines entsprechend konkaven Reflektorkörpers ist eine Vielzahl von lichtemittierenden Dioden, bevorzugt Weißlicht-Dioden, als Strahlungsquelle angeordnet.

Der obere Teil des Leuchtenkörpers ist dann mit dem unteren Teil, eine Kugel bildend, lösbar verbunden.

In einer Ausgestaltung der Erfindung kann der obere Teil des Leuchtenkörpers im Leuchtenkörpermaterial eingebettete oder innenseitig aufgebrachte Linsen bzw. strahlungsbündelnde Elemente umfassen, so daß der Gesamtwirkungsgrad der Anordnung verbessert werden kann.

In einer weiter bevorzugten Ausgestaltung ist die haubenartige Gehäusebaugruppe in Form eines Kegels oder Kegelstumpfes gestaltet, wobei im Bereich der oberen Deckfläche des Kegelstumpfes oder der Spitze des Kegels Mittel zur drehbaren Befestigung des Gelenks für den Solarzellenträger vorgesehen sind. Auf diese Weise kann der Solarzellenträger in Elevation und Azimut beliebig verstellt werden, um die gewünschte Anpassung an örtliche Gegebenheiten vorzunehmen.

In der haubenartigen Gehäusebaugruppe ist das notwendige Sekundärelement, d.h. ein oder mehrere Akkumulatoren angeordnet und es kann weiterhin von der haubenartigen Gehäusebaugruppe der Laderegler aufgenommen werden. Die derartigen elektronischen Komponenten können vorgefertigt und damit leicht austauschbar unter Vereinfachung der Montagetechnologie hergestellt werden.

Die haubenartige Gehäusebaugruppe ist mit dem unteren Teil des Leuchtenkörpers mechanisch verbunden, wobei hier sowohl lösbare Verbindungen durch Kraft und/oder Formschluß als auch stoffschlüssige Verbindungen denkbar sind. Der untere Leuchtenkörperteil nimmt in einer Ausgestaltung der Erfindung den Dämmerungsschalter und/oder Bewegungsmelder und/oder eine Ladebuchse oder weitere Bedien- und Anzeigeelemente auf.
Durch Abnahme des oberen Teils des Leuchtenkörpers sind alle die vorgenannten Komponenten für z.B. Wartung oder Reparaturzwecke leicht zugänglich.

Durch die Ausbildung der Gehäusebaugruppe nach Art einer kegelförmigen Haube kann mit dieser ein besonderes ästhetisches Gesamtbild geschaffen werden, da die Haube die elektronischen Baugruppen und Komponenten bedeckt, d.h. unter sich aufnimmt. Beim Betrachten des Leuchtenkörpers ist demnach nur die Solarzellenanordnung mit Träger und die Haube der Gehäusebaugruppe ersichtlich. Der untere Teil des Leuchtenkörpers kann aus einem . nichttransparenten, z.B. Kunststoffmaterial gefertigt werden und besitzt im unteren Zentrum die erwähnte Aussparung zur Aufnahme des Reflektors, welche wiederum im Fokus die lichtemittierenden Dioden als Strahlungsquellen aufweist.

Am montage- bzw. einsatzseitig tiefsten Punkt sind im unteren Teil des Leuchtenkörpers Kondensat-Austrittsöffnungen eingebracht. Zur Sicherung der Drehbewegung der Solarzellen kann die haubenartige Gehäusebaugruppe einen zapfenartigen Fortsatz besitzen, der dann das winkelverstellbare und arretierbare Gelenk für den Solarzellenträger aufnimmt. Das Gelenk ist hierbei Bestandteil eines Zwischenträgers, der eine Aussparung besitzt, die dem Fortsatz der haubenartigen Gehäusebaugruppe angepaßt ist. Der Zwischenträger verfügt über eine Bohrung zur Aufnahme einer Feststellschraube, um die gewünschte Drehlage zu fixieren.

Die komplette Solarleuchte wird von einem Ringhalter aufgenommen, wobei der Innendurchmesser des Ringhalters um einen vorgegebenen Betrag kleiner als der Außendurchmesser des Leuchtengehäuses ist. Dadurch, daß die Leuchte alle relevanten Komponenten enthält, ist ein völlig autarker Betrieb dieser möglich, ohne daß über den Halter oder weitere Befestigungseinrichtungen Installationsmittel geführt werden müssen.

Das kugelförmige Gehäuse und damit die Leuchte stellen eine komplette, in sich geschlossene Funktionseinheit dar, wobei mit einem üblichen Bleiakkumulator einer Kapazität von 12 Amperestunden, einem geeigneten Solar-Laderegler und bei bevorzugt eingesetzten Weißlicht-LEDs einer Betriebsspannung von 12 V mit einer Leistungsaufnahme von 0,9 W die erreichte Brenndauer im Bereich von etwa 8 Stunden liegt.

Die Erfindung soll anhand eines Ausführungsbeispiels sowie unter Zuhilfenahme von Figuren näher erläutert werden.

Hierbei zeigen:
- Fig. 1: eine seitliche Schnittdarstellung der Leuchte mit in der haubenartigen Gehäusebaugruppe befindlichem Sekundärelement nebst Solarregler;
- Fig. 2: eine weitere Schnittdarstellung der Solarleuchte, jedoch mit Blick auf Fig. 1 um 90° gedreht; und
- Fig. 3: ein Ausführungsbeispiel der Befestigung der Solarleuchte mit Ringhalter und Standfuß.

Die Solarleuchte gemäß den Figuren geht von einem kugelförmigen, mindestens teilweise lichtdurchlässigen Leuchtenkörper aus.
Der kugelförmige Leuchtenkörper ist geteilt ausgeführt und besitzt demnach einen unteren Teil 1 und einen oberen Teil 2. Beim Ausführungsbeispiel ist der obere Teil 2 transparent und der untere Teil 1 aus einem nichttransparenten Material gefertigt.

Der untere Teil 1 nimmt eine haubenartige Gehäusebaugruppe 3 auf. Beim gezeigten Beispiel hat die haubenartige Gehäusebaugruppe 3 die Form eines Kegelstumpfes.

Nahezu zentrisch ist in der haubenartigen Gehäusebaugruppe 3 eine Halterung 4 mit einem Akkumulator 5 vorgesehen. An der Halterung 4 für den Akku 5 ist ein Laderegler 6 befestigt.

Die notwendigen elektrischen Verbindungen zwischen den Solarzellen 7, dem Laderegler 6 und dem Akkumulator 5 können innerhalb der haubenartigen Gehäusebaugruppe optisch verdeckt verlegt werden.

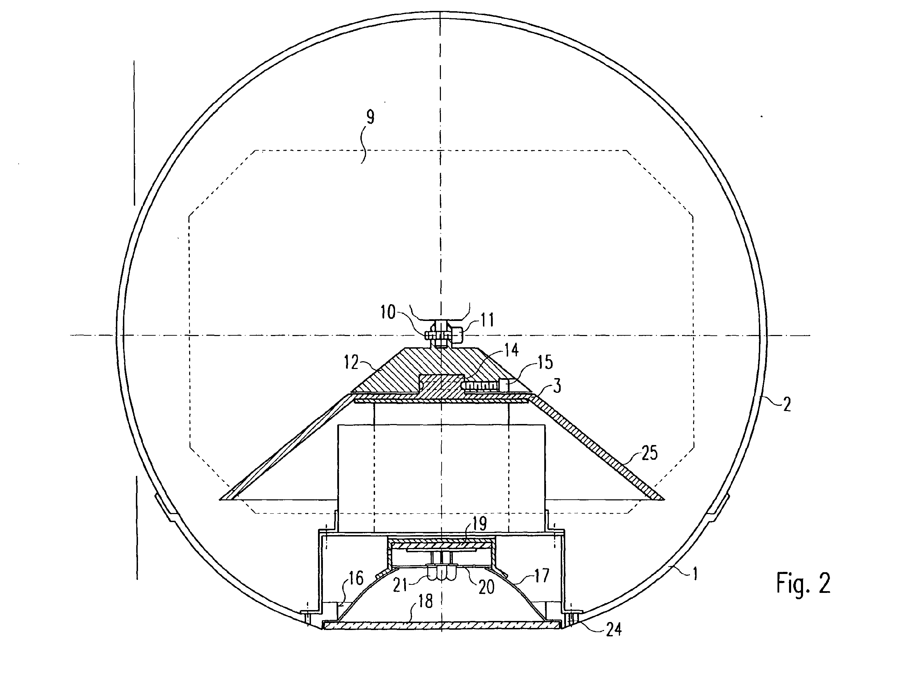

Oberhalb der haubenartigen Gehäusebaugruppe 3 ist ein winkelvariables, arretierbares Gelenk 8 zur Aufnahme des Solarzellenträgers 9 vorgesehen. Im einfachsten Fall ist das Gelenk in Form einer U-förmigen Nut (siehe Fig. 2) ausgebildet, wobei innerhalb der U-förmigen Nut ein Gelenkfortsatz aufgenommen und durch die Achse 10 einer Schraube 11 geführt ist.

Beim Ausführungsbeispiel wird weiterhin davon ausgegangen, daß im Bereich der oberen Deckfläche des Kegelstumpfes der haubenartigen Gehäusebaugruppe 3 ein Zwischenträger 12 vorgesehen ist. Der Zwischenträger 12 besitzt eine Ausnehmung 13, die mit einem Fortsatz 14 der Deckfläche des Kegelstumpfes korrespondiert.

Nach Einstellen der Drehlage durch Ausführen einer Rotationsbewegung des Zwischenträgers 12 mit Gelenk 8 kann die jeweilige Position mit Hilfe der Arretierschraube 15 festgestellt werden.

Im unteren Teil 1 des Leuchtenkörpers ist weiterhin eine Aussparung 16 zur Aufnahme eines Reflektorkörpers 17 ausgebildet. Der Reflektorkörper 17 ist von einer transparenten Scheibe 18 abgedeckt, welche im wesentlichen bündig mit dem unteren Leuchtenkörperteil 1 abschließt.

Im Fokus des Reflektorkörpers 17 ist ein Verdrahtungsträger 19 befindlich, der eine Vielzahl von lichtemittierenden Dioden 21, bevorzugt Weißlicht-Dioden aufnimmt. Die Weißlicht-Dioden 21 sind jeweils in Gruppen von 6 Stück vorkonfektioniert und vorverdrahtet, so daß der Montageaufwand minimiert und damit die Herstellungskosten bei der Fertigung der Leuchte gesenkt werden können.

Der Reflektorkörper 17 besitzt eine im wesentlichen zur Scheibe 18 verlaufende parallele Spiegelfläche 20. Diese Spiegelfläche 20 weist Ausnehmungen auf, durch die die verkappten lichtemittierenden Dioden 21 hindurch reichen.

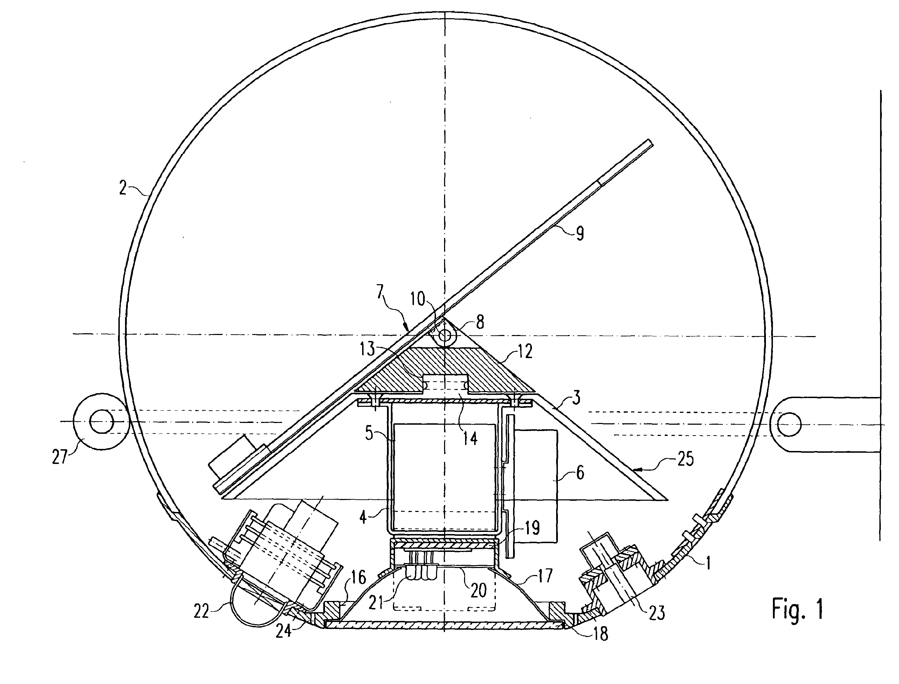

Wie insbesondere aus Fig. 1 ersichtlich, ist der obere Teil 2 des Leuchtenkörpers mit dem unteren Teil 1 lösbar verbunden. Durch Abnehmen des oberen Teils 2 sind alle funktionswesentlichen Komponenten, die sich ansonsten im Inneren des Leuchtenkörpers befinden, leicht zugänglich.

Der transparente, obere Teil 2 des Leuchtenkörpers nimmt etwa bezogen auf die Gesamtoberfläche der Kugel einen Anteil von etwa 70% bis 80% ein.

Mit Hilfe der Winkelverstellbar- und Drehbarkeit des Solarzellenträgers 9 mit dort befestigten Solarzellen 7 kann eine Verstellung in Azimut und Elevation und damit eine optimale Anpassung an Einsatz- und Umgebungsbedingungen mit dem Ziel eines maximalen Wirkungsgrads der Leuchte, d.h. einer hohen Brenndauer, erreicht werden.

Die Baugruppe aus Reflektorkörper 17, Scheibe 18, Verdrahtungsträger 19 sowie parallele Spiegelfläche 20 kann wiederum vorgefertigt und austauschbar gestaltet werden. Weiterhin besteht die Möglichkeit, in Abhängigkeit von der Kapazität des eingesetzten Akkumulators 5 die Anzahl der LEDs 21 zu variieren, insbesondere zu erhöhen.

Im unteren Teil 1 des Leuchtenkörpers sind weiterhin ein Dämmerungsschalter 22 und eine Ladebuchse 23 angeordnet. Weiterhin können zusätzlich (nicht gezeigte) Funktionsanzeige- und/oder Bedienelemente vorgesehen sein.

Der untere Teil 1 des Leuchtenkörpers weist weiterhin an seinen tiefsten Punkten Kondensat-Austrittsöffnungen 24 auf. Wie aus den Fig. 1 und 2 ersichtlich, verläuft die Achse des Gelenks 8 im wesentlichen durch den Mittelpunkt des Leuchtenkörpers, so daß eine maximale, d.h. diagonale Flächenerstreckung für die Solarzellen 7 bei gleichzeitiger optimaler Verstellbarkeit gewährleistet ist.

Die Seitenflächen 25 der haubenartigen Gehäusebaugruppe 3 decken die elektronischen Komponenten optisch und damit gestalterisch ab, so daß insgesamt eine Leuchte geschaffen wird, die hohen ästhetischen Ansprüchen genügt.

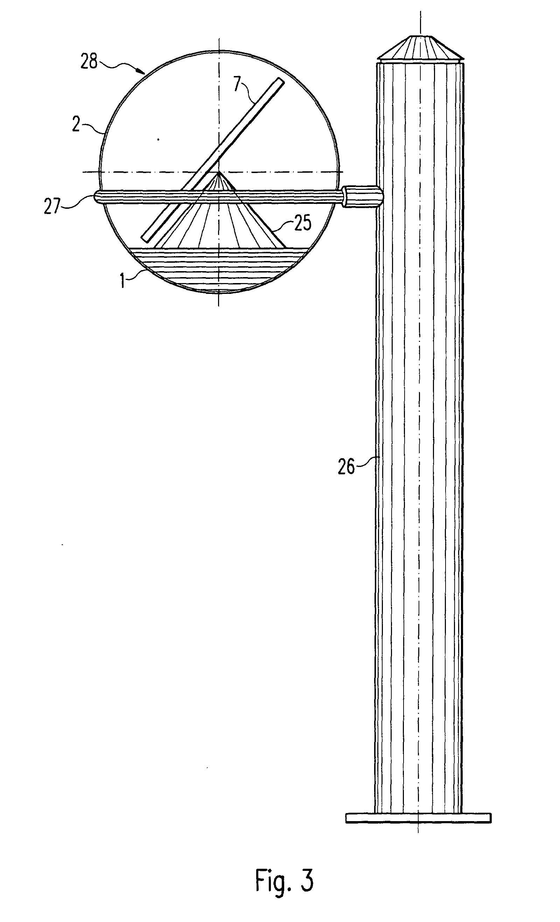

Eine beispielsweise Befestigung der Solarleuchte in Kugelform zeigt Fig. 3.

Hierbei wird von einem lediglich beispielhaften Standfuß 26 ausgegangen, der einen Ringhalter 27 trägt. Der in Fig. 1 ebenfalls erkennbare Ringhalter besitzt einen Innendurchmesser, welcher um einen vorgegebenen Betrag kleiner als der Außendurchmesser des Leuchtengehäuses 28 ist. Die Leuchte wird also allein durch ihr Eigengewicht gehalten, wobei, wenn erforderlich, noch zusätzliche Befestigungsklauen vorgesehen werden können.

Der Ringhalter 27 kann ebenso unmittelbar als Wandarm ausgeführt sein, so daß mit einem Standard-Leuchtenkörper und einer Ringhalter-Grundkonstruktion verschiedenste Befestigungsmöglichkeiten erschlossen werden können.

### Bezugszeichenliste

- 1: unterer Teil des Leuchtenkörpers
- 2: oberer Teil des Leuchtenkörpers
- 3: haubenartige Gehäusebaugruppe
- 4: Halterung für Akkumulator
- 5: Akkumulator
- 6: Laderegler
- 7: Solarzellen
- 8: Gelenk
- 9: Solarzellenträger
- 10: Achse
- 11: Schraube
- 12: Zwischenträger
- 13: Ausnehmung
- 14: Fortsatz
- 15: Arretierschraube
- 16: Aussparung
- 17: Reflektorkörper
- 18: Scheibe
- 19: Verdrahtungsträger
- 20: parallele Spiegelfläche
- 21: lichtemittierende Dioden
- 22: Dämmerungsschalter
- 23: Ladebuchse
- 24: Kondensat-Austrittsöffnungen
- 25: Seitenflächen der Haube
- 26: Standfuß
- 27: Ringhalter
- 28: Leuchtengehäuse

## Patentansprüche

1. Solarleuchte mit einem im wesentlichen kugelförmigen, mindestens teilweise lichtdurchlässigen Leuchtenkörper, dieser enthaltend einen Solarzellenträger, mindestens einen Akkumulator, einen Laderegler, einen Dämmerungsschalter sowie mindestens eine Strahlungsquelle, wobei der kugelförmige Leuchtenkörper radial geteilt ausgeführt ist und ein unterer Teil eine haubenartige Gehäusebaugruppe aufnimmt sowie der obere Teil des Leuchtenkörpers mit dem unteren Teil, eine Kugel bildend, lösbar verbunden ist,
**dadurch gekennzeichnet, daß**
oberhalb der haubenartigen Gehäusebaugruppe über ein winkelvariables, arretierbares Gelenk der Solarzellenträger befestigt ist,
weiterhin im unteren Teil des Leuchtenkörpers eine Aussparung zur Aufnahme eines Reflektors vorgesehen ist, wobei der Reflektor mit einer transparenten Scheibe abgedeckt wird und diese im wesentlichen bündig mit dem unteren Leuchtenkörperteil abschließt,
im Fokus des Reflektors eine Vielzahl von lichtemittierenden Dioden als Strahlungsquellen angeordnet ist und die haubenartige Gehäusebaugruppe eine Kegel- oder Kegelstumpfform besitzt, wobei im Bereich der oberen Deckfläche des Kegelstumpfes oder der Spitze des Kegels Mittel zur drehbaren Befestigung des Gelenks für den Solarzellenträger vorgesehen sind, so daß der Solarzellenträger in Elevation und Azimut verstellbar ist.

2. Solarleuchte nach Anspruch 1,
**dadurch gekennzeichnet, daß**
die haubenartige Gehäusebaugruppe den Akkumulator und den Laderegler aufnimmt.

3. Solarleuchte nach Anspruch 1 oder 2,
**dadurch gekennzeichnet, daß**
die haubenartige Gehäusebaugruppe mit dem unteren Teil des Leuchtenkörpers mechanisch verbunden ist.

4. Solarleuchte nach einem der vorangegangenen Ansprüche,
**dadurch gekennzeichnet, daß**
im unteren Leuchtenkörperteil der Dämmerungsschalter und/oder ein Bewegungsmelder und/oder eine Ladebuchse und/oder weitere Bedien- und Anzeigeelemente angeordnet sind.

5. Solarleuchte nach einem der vorangegangenen Ansprüche,
**dadurch gekennzeichnet, daß**
der untere Teil des Leuchtenkörpers aus einem nichttransparenten Material, bevorzugt Kunststoff besteht.

6. Solarleuchte nach Anspruch 7,
**dadurch gekennzeichnet, daß**
im montageseitig tiefsten Punkt des unteren Leuchtenkörperteils Kondensat-Austrittsöffnungen eingebracht sind.

7. Solarleuchte nach einem der vorangegangenen Ansprüche,
**dadurch gekennzeichnet, daß**
der Reflektorkörper als konkaver Spiegelreflektor ausgebildet ist, wobei die lichtemittierenden Dioden im Bereich des Spiegelreflektor-Fußpunkts angeordnet sind.

8. Solarleuchte nach einem der vorangegangenen Ansprüche,
**dadurch gekennzeichnet, daß**
die lichtemittierenden Dioden Weißlicht-Dioden sind.

9. Solarleuchte nach einem der vorangegangenen Ansprüche,
**gekennzeichnet durch**
einen Ringhalter zur Aufnahme des kugelförmigen Leuchtengehäuses, wobei der Innendurchmesser des Ringhalters um einen vorgegebenen Betrag kleiner als der Außendurchmesser des Leuchtengehäuses ist.
